# EUROPEAN PATENT APPLICATION

(11) **EP 3 858 546 A1**
(43) Date of publication of application: **04.08.2021**
(21) Application number: 19864156.5
(22) Date of filing: 12.09.2019
(51) Int. Cl.: B24B 37/24, B24B 37/00, B24B 37/22, B24B 37/26, B24D 13/14, C09G 1/02, C09K 3/14

(54) **POLISHING PAD, AND POLISHING METHOD USING SAME**

(30) Priority: 28.09.2018 JP 2018184431
(71) Applicant: Fujimi Incorporated, Kiyosu-shi, Aichi 452-8502 (JP)
(72) Inventor: TENKO Kyosuke, Kiyosu-shi, Aichi 452-8502 (JP); HISHIDA Shota, Kiyosu-shi, Aichi 452-8502 (JP); YASUI Daisuke, Kiyosu-shi, Aichi 452-8502 (JP); HASE Hideharu, Kiyosu-shi, Aichi 452-8502 (JP); KAMADA Toru, Kiyosu-shi, Aichi 452-8502 (JP)
(74) Representative: Maiwald Patent- und Rechtsanwaltsgesellschaft mbH
(86) International application number: PCT/JP2019/035977
(87) International publication number: WO 2020/066671

(57) **Abstract**

There are provided a polishing pad and a polishing method using the same that are useful for removing the surface waviness of a curved resin-painted surface at a high polishing removal rate. A polishing pad (10) according to one aspect of the present invention includes a layer having a polishing surface (30). The layer having the polishing surface (30) has a sparse and dense structure in which a proportion of a sparse portion of the polishing surface (30) is 52% or more and 96% or less, and is composed of a sheet material having an A hardness of 70 or more measured according to JIS K 6253.

## Description

### Technical Field

The present invention relates to a polishing pad and a polishing method using the same.

### Background Art

For example, a buffing process disclosed in PTL 1 is known as a processing method of smoothing a polishing object having a curved surface, specifically, a resin-painted surface of an automobile etc. The buffing process is a method of rotating a polishing ring, a so-called buff, made of cloth or other material having the surface or side surface to which various polishing compositions, namely abrasives etc. are attached to polish the polishing object.

### Citation List

### Patent Literature

PTL 1: JP 2012-251099 A

### Summary of Invention

### Technical Problem

However, the buffing process could not remove the surface waviness of a resin-painted surface and it was difficult to achieve beautiful surface finish.

An object of the present invention is to provide a polishing pad and a polishing method using the same that are useful for removing the surface waviness of a curved resin-painted surface at a high polishing removal rate.

### Solution to Problem

To solve the above problem, a polishing pad according to one aspect of the present invention includes a layer having a polishing surface. The layer having the polishing surface has a sparse and dense structure, in which a proportion of a sparse portion is 52% or more and 96% or less, and is composed of a sheet material having an A hardness of 70 or more measured according to JIS K 6253.

### Advantageous Effects of Invention

According to the present invention, the surface waviness of the curved resin-painted surface can be removed at a high polishing removal rate, and beautiful surface finish can be easily achieved in a short time.

### Brief Description of Drawings

FIG. 1A is a perspective view illustrative of a polishing pad according to a first embodiment of the present invention, and FIG. 1B is a cross-sectional view taken along the line A-A of the polishing pad illustrated in FIG. 1A;
FIG. 2A is a diagram illustrative of a configuration example of an automatic polishing apparatus that uses the polishing pad according to the first embodiment of the present invention, and FIGS. 2B and 2C are diagrams illustrative of a configuration example of a leading end of a polishing tool illustrated in FIG. 2A;
FIG. 3A is an explanatory view illustrative of the surface shape of a resin-painted surface before polishing, FIG. 3B is an explanatory view illustrative of the surface shape of the resin-painted surface after a buffing process according to a comparative example, FIG. 3C is an explanatory view illustrative of the surface shape of the resin-painted surface after polishing with the polishing pad in FIG. 1A, and FIG. 3D is an explanatory view illustrative of the surface shape of the resin-painted surface after the secondary polishing;
FIG. 4A is a top view illustrative of a polishing pad according to a second embodiment of the present invention, and FIG. 4B is a cross-sectional view taken along the line A-A of the polishing pad illustrated in FIG. 4A;
FIG. 5A is a cross-sectional view illustrative of a first modification example of the polishing pad illustrated in FIG. 4A, and FIG. 5B is a cross-sectional view illustrative of a second modification example of the polishing pad illustrated in FIG. 4A;
FIG. 6A is a top view illustrative of a third modification example of the polishing pad illustrated in FIG. 4A, and FIG. 6B is a cross-sectional view taken along the line A-A of the polishing pad illustrated in FIG. 6A;
FIG. 7A is a top view illustrative of a fourth modification example of the polishing pad illustrated in FIG. 4A, and FIG. 7B is a cross-sectional view taken along the line A-A of the polishing pad illustrated in FIG. 7A;
FIG. 8A is a top view illustrative of a fifth modification example of the polishing pad illustrated in FIG. 4A, and FIG. 8B is a cross-sectional view taken along the line A-A of the polishing pad illustrated in FIG. 8A;
FIG. 9A is a top view illustrative of a sixth modification example of the polishing pad illustrated in FIG. 4A, and FIG. 9B is a cross-sectional view taken along the line A-A of the polishing pad illustrated in FIG. 9A;
FIG. 10A is a top view illustrative of a seventh modification example of the polishing pad illustrated in FIG. 4A, and FIG. 10B is a cross-sectional view taken along the line A-A of the polishing pad illustrated in FIG. 10A;
FIG. 11 is a cross-sectional view explaining a configuration of a polishing pad according to another embodiment of the present invention;
FIG. 12 is a top view illustrative of a hard layer constituting the polishing pad of FIG. 11;
FIG. 13 is a top view of the hard layer illustrative of a modification example of the planar shape of cutouts;
FIG. 14 is a top view of the hard layer illustrative of another modification example of the planar shape of cutouts;
FIG. 15 is a top view of the hard layer illustrative of a modification example of the number and lengths of cutouts;
FIG. 16 is a cross-sectional view of the polishing pad illustrative of a modification example of the cross-sectional shape of the cutout;
FIG. 17 is a cross-sectional view illustrative of the polishing pad in which the hard layer has linear grooves;
FIG. 18 is a cross-sectional view illustrative of the polishing pad including a water stop layer;
FIG. 19 is a top view of the hard layer in which an annular penetrating portion penetrating through the polishing layer in the thickness direction is formed in a region inside from an outer edge of the polishing layer;
FIG. 20 is a top view of the hard layer in which circular penetrating portions penetrating through the polishing layer in the thickness direction are formed in the region inside from the outer edge of the polishing layer; and
FIG. 21 is a top view of the hard layer in which cocoon-shaped penetrating portions penetrating through the polishing layer in the thickness direction are formed in the region inside from the outer edge of polishing the layer.

### Description of Embodiments

Exemplary embodiments of the present invention will now be described with reference to the accompanying drawings. In addition, the following embodiments illustrate examples of the present invention and the present invention is not limited to the following embodiments. Moreover, various modifications or improvements can be made to the following embodiments and the present invention may also include forms with such modifications or improvements.

### 1. First Embodiment

A polishing pad according to the first embodiment includes a layer having a polishing surface. Herein, the layer having the polishing surface has a sparse and dense structure, in which a proportion of a sparse portion is 52% or more and 96% or less, and is composed of a sheet material having an A hardness of 70 or more measured according to JIS K 6253. In addition, the above JIS K 6253 is a standard corresponding to ISO 7619.

The polishing pad according to the first embodiment and a polishing tool including the polishing pad will be described below.

The polishing pad according to the first embodiment includes the layer having the polishing surface, and the layer having the polishing surface has a sparse and dense structure, in which a proportion of a sparse portion is 52% or more and 96% or less, and is composed of a sheet material having an A hardness of 70 or more measured according to JIS K 6253. In other words, the polishing pad according to the first embodiment includes the layer having the polishing surface, in which the layer having the polishing surface is composed of, for example, a sheet material consisting of an aggregate of fibers, a proportion of a sparse portion of the polishing surface is 52% or more and 96% or less, and the layer has an A hardness of 70 or more measured according to JIS K 6253.

In the polishing pad according to the first embodiment, the layer having the polishing surface may be composed of a nonwoven fabric pad or a sheet-like material containing resin fibers, for example. In addition, the nonwoven fabric pad may be composed of fibers alone or fibers impregnated with resin.

In the polishing pad according to the first embodiment, the layer having the polishing surface includes fibers consisting of synthetic resin, for example, and the synthetic resin may be composed of a material containing nylon resin, polyester resin, polyurethane resin, epoxy resin, aramid resin, polyimide resin, or polyethylene resin.

The polishing pad according to the first embodiment may further include, for example, on a surface of the layer having the polishing surface opposite to the polishing surface, a layer that consists of an elastic body and supports the layer having the polishing surface.

In the polishing pad according to the first embodiment, the layer supporting the layer having the polishing surface may be composed of an elastic body made of resin, for example.

In the polishing pad according to the first embodiment, for example, the layer supporting the layer having the polishing surface may have a lower A hardness measured according to JIS K 6253 than that of the layer having the polishing surface.

As described above, in the polishing pad according to the first embodiment, the polishing surface may be made to follow a resin-painted surface by forming the polishing pad having a two-layer structure that includes a hard layer forming the polishing surface and a soft layer supporting the hard layer. When the polishing surface is pressed against a curved surface of the resin-painted surface, the hard layer bends due to the distortion of the soft layer according to the curved surface, and the polishing surface tends to follow the curved surface of the resin-painted surface.

The polishing tool according to the first embodiment includes the polishing pad according to the first embodiment.

As described above, in the polishing tool according to the first embodiment, the polishing surface may be made to follow the resin-painted surface by including the polishing pad having a two-layer structure that includes the hard layer forming the polishing surface and the soft layer supporting the hard layer. When the polishing surface is pressed against the curved surface of the resin-painted surface, the hard layer bends due to the distortion of the soft layer according to the curved surface, and the polishing surface tends to follow the curved surface of the resin-painted surface.

Hereinafter, the first embodiment will be described in detail.

### 1-1. About Configuration Example of Polishing Pad

If the polishing pad has a polishing surface, the configuration of the polishing pad is not particularly limited. For example, the polishing pad may include a structure in which the polishing surface of the polishing pad is made to follow the resin-painted surface. The structure in which the polishing surface of the polishing pad is made to follow the resin-painted surface may have, for example, a two-layer structure including the hard layer forming the polishing surface and the soft layer supporting the hard layer, or may have a multi-layer structure with two or more layers.

Hereinafter, a configuration example of a polishing pad 10 having a two-layer structure including the hard layer forming the polishing surface and the soft layer supporting the hard layer will be described as an example of the polishing pad. In the following explanations, the hard layer forming the polishing surface is simply referred to as a "hard layer" and the soft layer supporting the hard layer is simply referred to as a "soft layer". In addition, in the present embodiment, "the hard layer" and "the soft layer" represent the real nature of relative layers. In other words, "the hard" means that the hardness of "the layer forming the polishing surface" that is one layer is higher than the hardness of "the layer supporting the layer having the polishing surface" that is another layer. On the contrary, "the soft" means that the hardness of "the layer supporting the layer having the polishing surface" that is the other layer is lower than the hardness of "the layer forming the polishing surface" that is one layer.

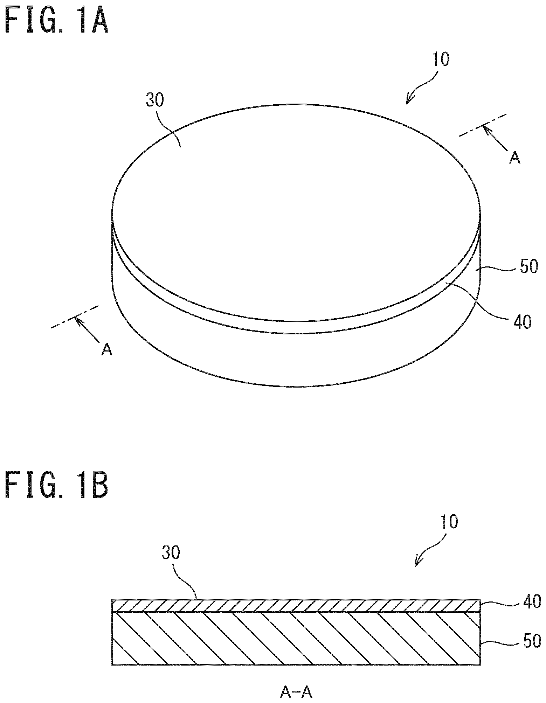

It will be described with reference to FIGS. 1A and 1B. The polishing pad 10 has a two-layer structure including a hard layer 40 and a soft layer 50. The hard layer 40 has a polishing surface 30 of the polishing pad 10. The soft layer 50 supports the hard layer 40, and when the polishing surface 30 is pressed against a curved surface of the resin-painted surface, is distorted according to the curved surface. For this reason, the hard layer 40 bends along the curved surface, and the polishing surface 30 tends to follow the curved surface of the resin-painted surface.

### 1-2. About Hard Layer

The hard layer 40 may be composed of a sheet material in which a proportion (hereinafter, called an area ratio of a sparse portion) of a sparse portion of the polishing surface 30 is 52% or more and 96% or less. The hard layer may be preferably composed of a sheet material in which the area ratio of the sparse portion is 54% or more and 96% or less, and may be more preferably composed of a sheet material in which the area ratio is 60% or more and 96% or less. If the area ratio is in such the ranges, the holding power of a polishing composition to a polishing interface is improved to be able to obtain a sufficient polishing removal rate. Herein, the polishing composition consists of emulsion that contains abrasives and at least one additive selected from an oil solvent, an emulsion stabilizer, and a thickener as described below. In addition, if the area ratio of the sparse portion is less than 52%, the holding power of the polishing composition to the polishing interface, which consists of emulsion containing abrasives and at least one additive selected from an oil solvent, an emulsion stabilizer, and a thickener, is decreased, and a polishing rate tends to be decreased.

When forming grooves as described below in the sheet material, an area ratio of the sparse portion of a polishing contact surface without grooves may be 52% or more and 96% or less.

In addition, an adjusting method of the area ratio of the sparse portion is not particularly limited. For example, in the case of a nonwoven fabric sheet, the area ratio may be adjusted by the thickness of the fiber, the content of the fiber, the amount of the impregnated resin, the patterning of the surface, or the like. In the case of a mesh structure in which elongated materials are arranged to intersect each other, the area ratio may be adjusted by the diameter of the structural material, the spacing of the structures, the lamination condition, or the like. In the case of a foamed structure in which a void is generated inside by using a foaming agent etc., the area ratio may be adjusted by the type, amount, etc. of a foaming agent. In the case of suede formed by a wet film forming method, the area ratio may be adjusted by the film forming condition or the buffing condition.

For example, the area ratio of the sparse portion of the hard layer 40 can be obtained by image analysis of the surface of the polishing pad measured with a microscope. Specifically, the surface of the polishing pad is measured at any 10 points in a range of a viewing angle of 1.4 mm × 1.4 mm and a height direction of 0.1 mm at a magnification of 200 times (objective 10 times and eyepiece 20 times) by using VK-X200 made by KEYENCE Corporation, the obtained images are monochromated by using WinROOF2018 made by MITANI Corporation, and the area ratio can be obtained by calculating a proportion of a blank area to a total area of the automatically binarized area. That is to say, the "sparse portion" is a portion in which fibers etc. constituting the polishing pad 10 do not exist within a depth of 0.1 mm from the outermost surface of the polishing pad 10. In other words, in the layer having the polishing surface 30, a proportion of an area of a void portion within a thickness of 0.1 mm from the outermost surface may be 52% or more and 96% or less. Herein, the "area" means an area when the layer having the polishing surface 30 is viewed in a thickness direction.

The hardness of the hard layer 40 may be an A hardness of 70 or more measured according to JIS K 6253, and is more preferably the A hardness of 80 or more. If the hardness is in such the ranges, polishing of the curved surface of the resin-painted surface by the polishing pad 10 is hard to become polish a curved panel, and the surface waviness of the resin-painted surface can be removed. On the other hand, if the A hardness of the hard layer 40 is less than 70, the waviness elimination of the hard layer 40 is decreased and a beautiful surface does not tend to be obtained. Moreover, the maximum value of the A hardness measured according to JIS K 6253 is 100.

In addition, in the case of a nonwoven fabric sheet, the A hardness can be adjusted by the material of the fiber, the thickness of the fiber, the content of the fiber, the amount of the impregnated resin, the hardness of the impregnated resin, or the like.

The A hardness of the hard layer 40 can be measured according to JIS K 6253. For example, the ASKER rubber hardness meter AL type is attached to the constant pressure loader CL-150L, a test piece is placed on the constant pressure loader to be kept parallel, and the rubber hardness meter AL type is made to contact the test piece so as not to give an impact. At this time, the mass applied to the pressure surface is regarded to be 1 kg. The A hardness can be measured by reading numeric values of the rubber hardness meter AL type 15 seconds after the contact and employing the smallest value among the five points measured at 3 mm intervals.

The material of the hard layer 40 is not particularly limited, and may be a material in which an area ratio of the sparse portion of the polishing surface 30 is 52% or more and 96% or less and the A hardness is 70 or more. For example, various types such as: a type having differences in materials such as a polyurethane type, a foamed polyurethane type, a nonwoven fabric type, and a suede type; a type having differences in physical properties such as the hardness and thickness; and further a type such as those containing abrasives and those not containing abrasives can be used without limitation. In particular, the material of the hard layer 40 may be a nonwoven fabric, for example, and is preferably a sheet-like material containing resin fibers. In other words, the dense portion of the polishing surface may be composed of a material that includes fibers and resin.

Moreover, the material of the hard layer 40 may be a material that includes synthetic resin. The synthetic resin included in the hard layer 40 may be composed of, for example, a material containing at least one of nylon resin, polyester resin, polyurethane resin, epoxy resin, aramid resin, polyimide resin, and polyethylene resin. If it is composed of the above material, deep scratches (scratches) can be reduced on a surface to be polished. As a specific example, the resin fiber of the hard layer 40 is preferably nylon resin, polyester resin, polyurethane resin, or polyethylene resin, and is more preferably nylon resin or polyester resin. Moreover, the synthetic resin of the hard layer 40 may be cured by a curing agent or may be cured by heat.

The thickness of the resin fiber of the hard layer 40 is not particularly limited, but is preferably 1 denier or more and 10 deniers or less. Moreover, the thickness of the resin fiber may be one type, or two or more types of which the thicknesses of the resin fiber are different may be mixed.

The thickness of the hard layer 40 is not particularly limited, but is preferably 0.05 cm or more and 0.5 cm or less. If the thickness of the hard layer 40 is in such a range, the hard layer 40 easily bends along the curved surface of the resin-painted surface when the polishing surface 30 is pressed against the curved surface of the resin-painted surface, and the followability of the polishing surface 30 to the curved surface of a polishing object tends to be improved. For this reason, the waviness component of the surface shape of the polishing object can be removed, and a contact area between the polishing surface 30 and the curved surface tends to increase and polishing efficiency tends to be improved.

### 1-3. About Soft Layer

The soft layer 50 is a layer that is provided to support the hard layer 40 on a surface of the hard layer 40 opposite to the polishing surface 30, and is a layer composed of an elastic body. The elastic body constituting the soft layer 50 may be resin for example.

The hardness of the soft layer 50 is preferably the A hardness less than 60 measured according to JIS K 6253, and is more preferably the A hardness of 30 or less. That is to say, the A hardness of the soft layer 50 may be lower than the A hardness of the hard layer 40. If it is in such a range, the soft layer 50 is easily distorted when the polishing surface 30 is pressed against the curved surface of the resin-painted surface. As a result, the hard layer 40 easily bends along the curved surface of the resin-painted surface, and the followability of the polishing surface 30 to the curved surface of the polishing object tends to be improved. A contact area between the polishing surface 30 and the curved surface tends to increase and polishing efficiency tends to be improved.

The A hardness of the soft layer 50 can be measured, for example, by attaching the ASKER rubber hardness meter A type to the constant pressure loader CL-150L and employing the largest value among the five points measured at 3 mm intervals by the method according to JIS K 6253.

The thickness of the soft layer 50 is not particularly limited, but the thickness of the soft layer 50 is preferably 0.50 cm or more and 5.0 cm or less. If it is in such a range, the distortion amount of the soft layer 50 and the bending amount of the hard layer 40 can be secured when the polishing surface 30 is pressed against the curved surface of the resin-painted surface.

The material of the soft layer 50 is not particularly limited, but may be a material having the above hardness. The material of the soft layer 50 may be a resin foam such as a polyurethane foam and a polyethylene foam.

### 1-4. About Polishing Method

A polishing method according to the first embodiment can be used, for example, for an automatic polishing process of attaching a polishing pad having a polishing surface formed by a hard layer to an automatic polishing apparatus including a robot arm and polishing a curved resin-painted surface.

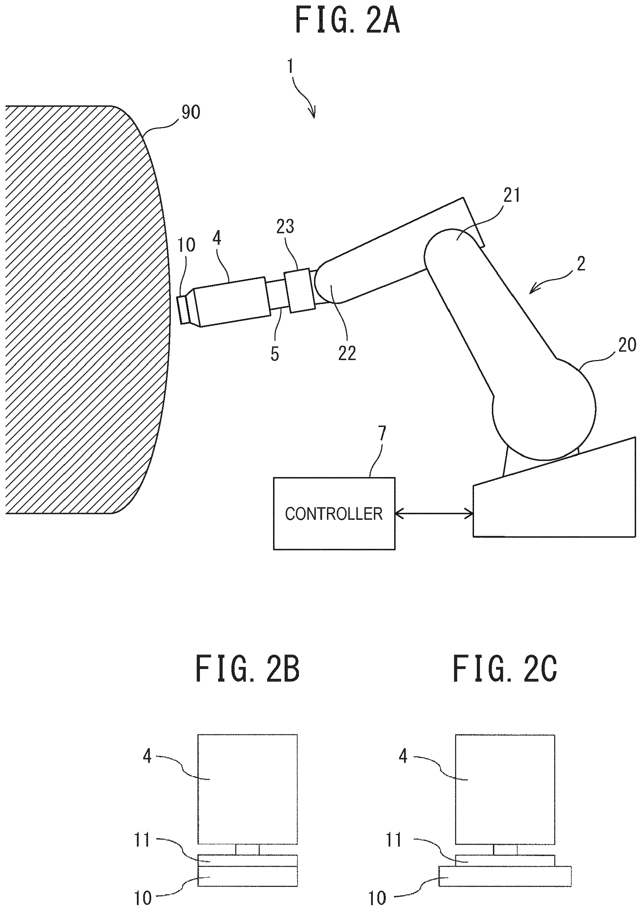

Referring to FIG. 2A, an automatic polishing apparatus 1 includes a robot arm 2, the polishing pad 10, a polishing tool 4, a pressing pressure detecting unit 5, and a controller 7. The reference number 90 indicates a polishing object. The polishing object 90 may be a car body of an automobile etc. of which a surface is coated with resin, for example. The robot arm 2 includes a plurality of joints 20, 21, and 22, and can move in a plurality of directions a leading end 23 to which the polishing pad 10, the polishing tool 4, and the pressing pressure detecting unit 5 are attached.

The polishing tool 4 is attached to the leading end 23 via the pressing pressure detecting unit 5, and rotates the polishing pad 10 by a built-in driving means by using a direction perpendicular to the polishing surface 30 as a rotation axis. Referring to FIGS. 2B and 2C, the polishing tool 4 includes a polishing pad attaching part 11 at the tip. FIG. 2B illustrates an example in which a diameter of the polishing pad 10 is the same as a diameter of the polishing pad attaching part 11, and FIG. 2C illustrates an example in which the diameter of the polishing pad 10 is larger than the diameter of the polishing pad attaching part 11. The controller 7 controls the behavior of the robot arm 2 and the rotation of the polishing pad 10 by the polishing tool 4. The polishing composition is supplied between the polishing pad 10 and the polishing object 90 from a polishing composition supply mechanism not illustrated. The controller 7 makes the robot arm 2 press the polishing pad 10 against the surface of the polishing object 90 and rotate the polishing pad 10 to polish the surface of the polishing object 90. The pressing pressure detecting unit 5 detects a pressing force of the polishing surface 30 against the polishing object 90.

The controller 7 may adjust a force for pressing the polishing surface 30 against the polishing object 90 based on the detection result by the pressing pressure detecting unit 5. Based on the detection result by the pressing pressure detecting unit 5, the controller 7 may control the robot arm 2 so that the polishing surface 30 moves on the surface of the polishing object 90 while keeping the pressing force of the polishing surface 30 against the polishing object 90 to be constant.

As described above, in the polishing method according to the first embodiment, the polishing surface 30 of the polishing pad 10 may be caused to scan and polish the surface of the polishing object 90 in the presence of the polishing composition containing abrasives to be described below. Note that, for example, an apparatus in which a double action polisher is attached to the tip of the arm of the industrial robot "M-20iA" made by FANUC Corporation is used as the automatic polishing apparatus 1 that can be used in the polishing method according to the first embodiment. The polishing pad can be attached to the double action polisher. Polishing can be performed by pressing the polishing surface of the polishing pad against the surface to be polished of the polishing object with a pressing force applied to the arm and rotating the double action polisher while supplying the polishing composition onto the surface to be polished.

In this regard, however, the polishing method according to the present embodiment is not limited to be applied to the automatic polishing apparatus 1 described above. For example, the polishing method according to the present embodiment may be applied to a case where the polishing pad 10 is attached to the tip of a hand polisher and a polishing worker manually moves the hand polisher to polish the resin-painted surface, namely the surface of the polishing object 90. The driving means of the hand polisher is not particularly limited, but generally employs a single action, a double action, a gear action, or the like. A double action is preferred for the polishing of a painting member. That is to say, the polishing surface 30 of the polishing pad 10 included in the polishing tool 4 may be caused to scan and polish the surface of the polishing object 90 in the presence of the polishing composition containing abrasives to be described below.

The method of fixing the polishing pad 10 to the polishing pad attaching part 11 of the polishing tool 4 is not particularly limited, but may include a fixing method of using a double-sided adhesive tape, an adhesive, a hook-and-loop fastener, or the like, for example.

The cross-sectional shape of a portion of the polishing pad 10 that contacts the polishing pad attaching part 11 of the polishing tool 4 is not particularly limited, but may include a linear shape, a curved shape, a shape combining these, or the like, for example.

The circumferential shape of the portion of the polishing pad 10 that contacts the polishing pad attaching part 11 of the polishing tool 4 is not particularly limited, but may include a circular shape, a polygonal shape, a petal shape, a star shape, or the like, for example.

Processing such as grooving, hole processing, and embossing may be performed on the surface of the portion of the polishing pad 10 that contacts the polishing pad attaching part 11 of the polishing tool 4, but processing other than these may be performed on the surface.

The material of the polishing pad attaching part 11 of the polishing tool 4 is not particularly limited if the material is harder than that of the polishing pad 10 to sufficiently transfer the pressing pressure to the polishing pad 10, but the material can employ resin, metal, ceramic, fiber-reinforced resin, a composite material, or the like, for example. The fiber-reinforced resin includes carbon fiber-reinforced resin and glass fiber-reinforced resin, for example. The type of resin that is used for the fiber-reinforced resin is not particularly limited, but includes epoxy resin for example. Moreover, for example, the composite material includes a composite material etc. obtained by combining two or more types of materials such as metal intentionally containing inorganic particles.

Note that the above present embodiment illustrates an example of the present invention and thus the present invention is not limited to the following embodiment. Moreover, various modifications or improvements can be added to the above present embodiment, and the present invention may also include forms with such modifications or improvements. For example, the polishing method according to the present embodiment is suitable for polishing a curved surface to be polished, but can be also applied to polishing a planar surface to be polished.

### 1-5. About Effects of First Embodiment

The polishing pad 10 according to the first embodiment includes the hard layer 40. The area ratio of the sparse portion of its polishing surface 30 is 52% or more and 96% or less, and the hard layer is composed of a sheet material having the A hardness of 75 or more measured according to JIS K 6253. With this configuration, the holding power of the polishing composition to the polishing interface, which consists of emulsion containing abrasives and at least one additive selected from an oil solvent, an emulsion stabilizer, and a thickener, is improved, and thus a sufficient polishing removal rate can be obtained.

The hard layer 40 constituting the polishing pad 10 according to the first embodiment may be composed of a sheet material having the A hardness of 80 or more measured according to JIS K 6253. With this configuration, polishing of the surface of the resin-painted surface by the polishing pad 10 is hard to become polish a curved panel, and the waviness of the surface of the resin-painted surface can be removed.

Moreover, the hard layer 40 constituting the polishing pad 10 according to the first embodiment may be composed of a nonwoven fabric pad or a sheet-like material containing resin fibers. With this configuration, a contact area of the polishing surface 30 that contacts the curved resin-painted surface is increased to improve polishing efficiency, and thus a time required for polishing a comparatively large resin-painted surface can be shortened.

The hard layer 40 constituting the polishing pad 10 according to the first embodiment includes fibers consisting of synthetic resin. The synthetic resin may be composed of a material containing at least one of nylon resin, polyester resin, polyurethane resin, epoxy resin, aramid resin, polyimide resin, and polyethylene resin. With this configuration, because the polishing surface 30 follows the curved surface of the resin-painted surface, the waviness component of the surface shape of the polishing object can be removed.

Moreover, the polishing pad 10 according to the first embodiment may include the soft layer 50. With this configuration, because the polishing surface 30 follows the curved surface of the resin-painted surface, the waviness component of the surface shape of the polishing object can be removed and a contact area of the polishing surface 30 that contacts the curved resin-painted surface is increased to improve polishing efficiency, and a time required for polishing a comparatively large resin-painted surface can be shortened.

The soft layer 50 constituting the polishing pad 10 according to the first embodiment may be composed of an elastic body made of resin. With this configuration, because the polishing surface 30 follows the curved surface of the resin-painted surface, the waviness component of the surface shape of the polishing object can be removed.

Moreover, the hard layer 40 may have the A hardness, measured according to JIS K 6253, lower than the soft layer 50 constituting the polishing pad 10 according to the first embodiment. With this configuration, a contact area of the polishing surface 30 that contacts the curved resin-painted surface is increased to improve polishing efficiency, and thus a time required for polishing a comparatively large resin-painted surface can be shortened.

The polishing method according to the first embodiment is to polish the resin-painted surface by using the polishing pad 10 having the polishing surface 30 formed by the hard layer 40. Specifically, in the polishing method according to the first embodiment, the polishing surface 30 of the polishing pad 10 according to the first embodiment is caused to scan and polish the curved resin-painted surface that is the polishing object in the presence of the polishing composition containing abrasives. Moreover, in the polishing method according to the first embodiment, the polishing surface 30 of the polishing pad 10 included in the polishing tool 4 according to the first embodiment is caused to scan and polish the curved resin-painted surface that is the polishing object in the presence of the polishing composition containing abrasives. With these configurations, because the polishing surface 30 follows the curved surface of the resin-painted surface, the waviness component of the surface shape of the polishing object can be removed and a contact area of the polishing surface 30 that contacts the curved resin-painted surface is increased to improve polishing efficiency, and a time required for polishing a comparatively large resin-painted surface can be shortened.

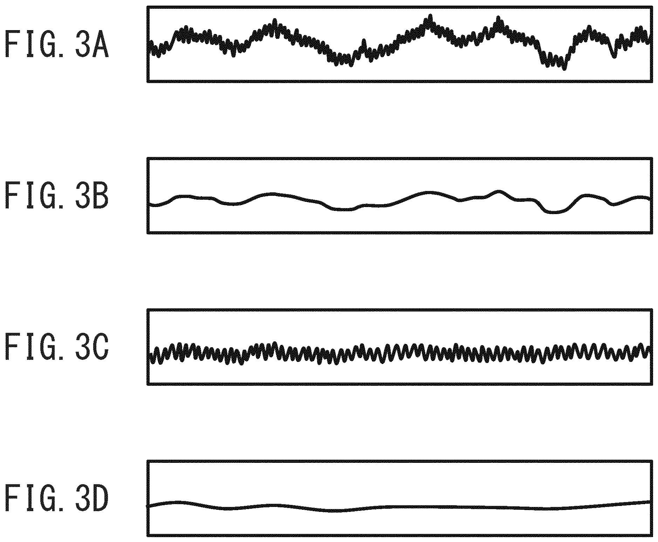

It will be described with reference to FIGS. 3A to 3C. FIG. 3A schematically illustrates a profile of the surface shape of the resin-painted surface before polishing. The surface shape before polishing has a surface roughness component with relatively high frequency and a waviness component with relatively low frequency.

FIG. 3B illustrates a profile of the surface shape of the resin-painted surface after a buffing process as a comparative example. The hardness of polishing cloth is comparatively low in the buffing process, resulting in polish a curved panel. For this reason, the surface roughness component is removed, but the waviness component remains even after polishing.

FIG. 3C schematically illustrates a profile of the surface shape of the resin-painted surface after polishing is performed by the polishing pad 10 according to the first embodiment. Because the polishing surface 30 is formed by the hard layer 40, polishing the surface of the resin-painted surface is hard to become polish a curved panel. For this reason, the waviness component of the surface shape of the resin-painted surface is removed.

### 1-6. About Secondary Polishing

When removing a minute surface roughness component after polishing is performed by the polishing pad 10, the secondary polishing for removing the surface roughness component may be performed after the primary polishing is performed by the polishing pad 10. In this case, after polishing is performed by the polishing pad 10, the polishing pad attached to the polishing tool 4 illustrated in FIGS. 2A and 2B is exchanged, for example, and the surface of the polishing object 90 is polished by using a polishing pad having a hardness lower than the hard layer 40 of the polishing pad 10.

The hardness of the polishing pad used for the secondary polishing is not particularly limited, but the A hardness of the pad for the secondary polishing is preferably lower than that of the pad for the primary polishing. For example, the A hardness is preferably less than 50 and is more preferably 40 or less. If it is in such the ranges, the fine surface roughness component on the surface of the resin-painted surface can be removed.

FIG. 3D schematically illustrates a profile of the surface shape of the resin-painted surface after the secondary polishing. Both of the surface roughness and waviness on the surface of the resin-painted surface are removed by the polishing with the polishing pad 10 and the subsequent secondary polishing.

The material of the polishing pad used for the secondary polishing is not particularly limited, and any material having the above hardness may be used. For example, the material of the polishing pad used for the secondary polishing may be a nonwoven fabric, suede, or sponge.

The polishing pad used for the secondary polishing may have a one-layer structure, or may have a multi-layer structure with two or more layers similar to the polishing pad 10.

The hardness of the first layer is not particularly limited, but is preferably lower than the hardness of the hard layer 40 of the polishing pad 10. For example, the hardness of the first layer is preferably less than 50 in the A hardness, and is more preferably 40 or less.

The thickness of the first layer is not particularly limited, but is preferably 2.0 cm or less. Moreover, in the case of a structure with two or more layers, the thickness of the first layer is preferably 0.05 cm or more. Moreover, the thickness is preferably 0.5 cm or less. If it is in such the ranges, the first layer easily bends along the curved surface of the resin-painted surface when the polishing surface is pressed against the curved surface of the resin-painted surface, and a contact area between the polishing surface and the curved surface tends to increase and polishing efficiency tends to be improved.

The material of the first layer is not particularly limited, and any material having the above hardness may be used. The material of the first layer may be a nonwoven fabric, suede, or sponge, for example.

The configuration of the second layer may be similar to the configuration of the soft layer 50 of the polishing pad 10.

### 1-7. Modification Example

The structure of the polishing pad 10 is not limited to the two-layer structure illustrated in FIGS. 1A and 1B. It suffices that the polishing pad 10 includes the hard layer forming the polishing surface 30. For example, the polishing pad 10 may not include the soft layer for supporting the hard layer forming the polishing surface 30.

In this case, the controller 7 illustrated in FIG. 2A may control the robot arm 2 so that the polishing surface 30 moves along the curved surface on the surface of the polishing object 90. By controlling the robot arm 2 so that the polishing surface 30 moves along the curved surface on the surface of the polishing object 90, the waviness of the surface of the polishing object 90 can be removed by the polishing surface 30 formed by the hard layer.

### 2. Second Embodiment

Next, the second embodiment of the present invention will be described. A polishing pad according to the second embodiment is made by forming grooves on the polishing surface 30 of the polishing pad 10 according to the first embodiment. By forming the grooves on the polishing surface 30, the polishing surface 30 easily follows the curved surface of the resin-painted surface when the polishing surface 30 is pressed against the curved surface of the resin-painted surface.

A method of forming such the grooves is not particularly limited, but the grooves can be formed by forming the two-layer structure that includes the hard layer 40 and the soft layer 50 and then removing portions to be grooves by etching etc., for example. Moreover, the grooves can be formed by forming the two-layer structure and then scanning the surface while pressing a circular cutting blade rotating at high speed against the pad by a predetermined amount.

### 2-1. Configuration of Grooves

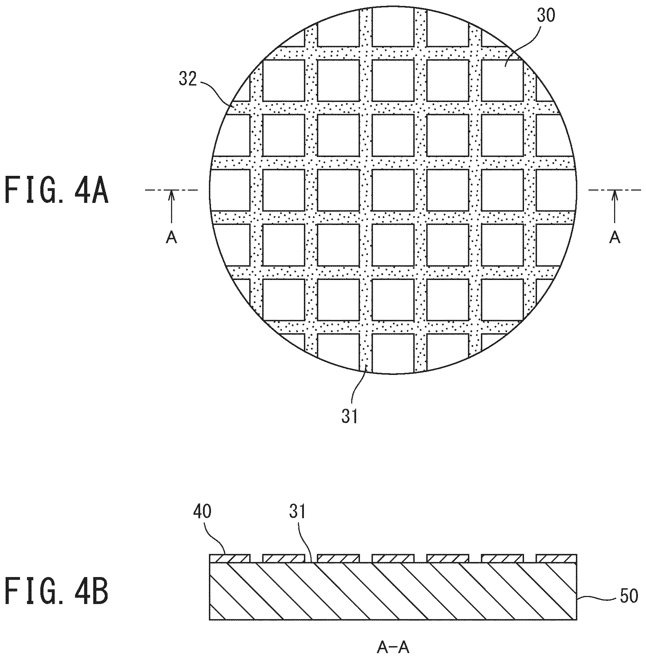

Referring to FIGS. 4A and 4B, the components having the same functions as those of FIG. 1A have the same reference numbers. First grooves 31 and second grooves 32 are formed on the polishing surface 30 of the polishing pad 10. The first grooves 31 extend along the first direction on the polishing surface 30, and the second grooves 32 extend along the second direction perpendicular to the first direction on the polishing surface 30. The grooves are formed on the polishing surface 30 in a grid pattern by forming the plurality of first grooves 31 and the plurality of second grooves 32on the polishing surface 30.

The depth of the first grooves 31 and the second grooves 32 is not particularly limited, but the depth may be the same as the thickness of the hard layer 40. In other words, the hard layer 40 may be divided into two or more layers by the first grooves 31 and the second grooves 32. Moreover, the first grooves 31 and the second grooves 32 are formed only in the hard layer 40 and are not formed in the soft layer 50. By dividing the hard layer 40 by the first grooves 31 and the second grooves 32, the hard layer 40 can be displaced in a contact direction according to the curved surface when the polishing surface 30 is pressed against the curved surface of the resin-painted surface. For this reason, the polishing surface 30 easily follows the curved surface of the resin-painted surface.

The groove width of the first grooves 31 and the second grooves 32 is not particularly limited, but is preferably 0.5 mm or more and is more preferably 1.0 mm or more, for example. Moreover, the groove width of the first grooves 31 and the second grooves 32 is not particularly limited, but is preferably 5.0 mm or less and is more preferably 2.0 mm or less, for example.

If it is in such the ranges, while suppressing the decrease in a contact area between the resin-painted surface and the polishing surface 30 by the formation of the grooves, it is possible to secure the displacement amount of the hard layer 40 to easily bend the polishing surface 30 when the polishing surface 30 is pressed against the curved surface of the resin-painted surface.

The pitch of the first grooves 31 and the pitch of the second grooves 32 are not particularly limited, but is preferably 3.0 mm or more and is more preferably 4.0 mm or more, for example. Moreover, the pitch of the first grooves 31 and the pitch of the second grooves 32 are not particularly limited, but is preferably 50 mm or less, is more preferably 20 mm or less, and is further preferably 8 mm or less, for example. Herein, "pitches" mean a distance between the first grooves 31 and a distance between the second grooves 32.

If these are in such the ranges, while suppressing the decrease in a contact area between the resin-painted surface and the polishing surface 30 by the formation of the grooves, it is possible to secure the total bending amount of the polishing surface 30 when the polishing surface 30 is pressed against the curved surface of the resin-painted surface.

Note that the dimensions of the groove width and pitch described above are the same in the first to seventh modification examples to be explained below.

### 2-2. About First Modification Example

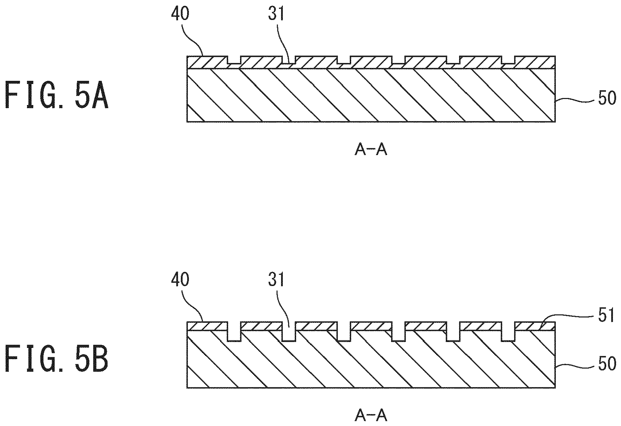

Referring to FIG. 5A, the depth of the first grooves 31 and the second grooves 32 is not particularly limited, but may be shallower than the thickness of the hard layer 40. In other words, the hard layer 40 is not divided into two or more layers by the first grooves 31 and the second grooves 32, and the thickness of portions corresponding to the first grooves 31 and the second grooves 32 in the hard layer 40 is thinner than the thickness of other portions. Because the rigidity of the portions corresponding to the first grooves 31 and the second grooves 32 is decreased, the hard layer 40 easily bends. For this reason, the polishing surface 30 easily follows the curved surface of the resin-painted surface.

### 2-3. About Second Modification Example

Referring to FIG. 5B, the depth of the first grooves 31 and the second grooves 32 is not particularly limited, but may be deeper than the thickness of the hard layer 40. In other words, the first grooves 31 and the second grooves 32 may be formed in the hard layer 40 and the soft layer 50. Therefore, a support surface 51 of the soft layer 50 supporting the hard layer 40 is also divided by the first grooves 31 and the second grooves 32. The divided layers of the hard layer 40 are respectively supported by the divided surfaces of the support surface 51.

Because the first grooves 31 and the second grooves 32 are also formed in the soft layer 50, the rigidity of the soft layer 50 is decreased, and when the polishing surface 30 is pressed against the curved surface of the resin-painted surface, the soft layer 50 is easily distorted according to the curved surface. Moreover, because the support surface 51 supporting the hard layer 40 is divided, a binding force between the divided surfaces of the support surface 51 is decreased and the divided layers of the hard layer 40 are easy to be independently displaced. For this reason, the displacement amount of the hard layer 40 in the contact direction becomes large, and the polishing surface 30 easily follows the curved surface of the resin-painted surface.

### 2-4. About Third Modification Example

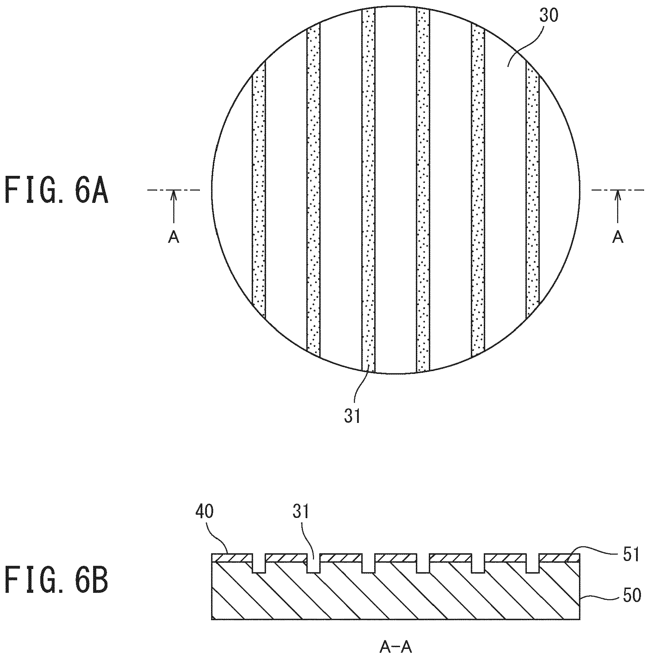

Referring to FIGS. 6A and 6B, only the first grooves 31 are formed on the polishing surface 30, and the second grooves 32 are not formed on the polishing surface 30. The grooves are formed on the polishing surface 30 in a stripe pattern by forming the plurality of first grooves 31 on the polishing surface 30.

The depth of the first grooves 31 is not particularly limited, but may be deeper than the thickness of the hard layer 40. In other words, the first grooves 31 may be formed in the hard layer 40 and the soft layer 50. Therefore, the support surface 51 of the soft layer 50 supporting the hard layer 40 is also divided by the first grooves 31. The divided layers of the hard layer 40 are respectively supported by the divided surfaces of the support surface 51. Note that the depth of the first grooves 31 may be the same as the thickness of the hard layer 40 or may be shallower than that.

By forming striped grooves on the polishing surface 30 by omission of the second grooves 32, the strength of the polishing surface can be improved and man-hours forming the grooves are reduced to contribute to cost reduction. Moreover, the decrease in the followability of the polishing surface 30 due to not forming the second grooves 32 extending in the second direction is reduced by forming the first grooves 31 in the hard layer 40.

### 2-5. About Fourth Modification Example

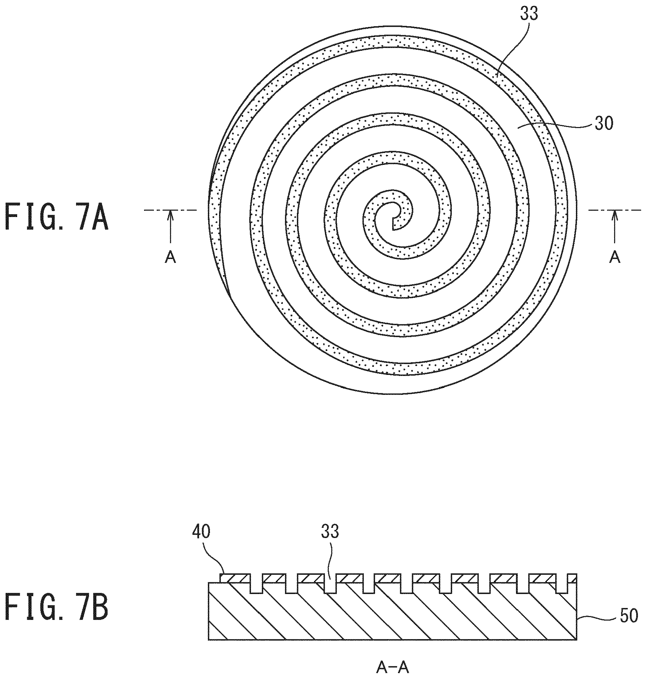

Referring to FIGS. 7A and 7B, a third groove 33 is formed on the polishing surface 30. A groove is formed on the polishing surface 30 in a spiral pattern by forming the third groove 33 on the polishing surface 30.

The depth of the third groove 33 is not particularly limited, but may be deeper than the thickness of the hard layer 40. In other words, the third groove 33 may be formed in the hard layer 40 and the soft layer 50. Note that the depth of the third groove 33 may be the same as the thickness of the hard layer 40 or may be shallower than that.

By forming a spiral groove on the polishing surface 30, the strength of the polishing surface can be improved and man-hours forming the groove are reduced to contribute to cost reduction.

### 2-6. About Fifth Modification Example

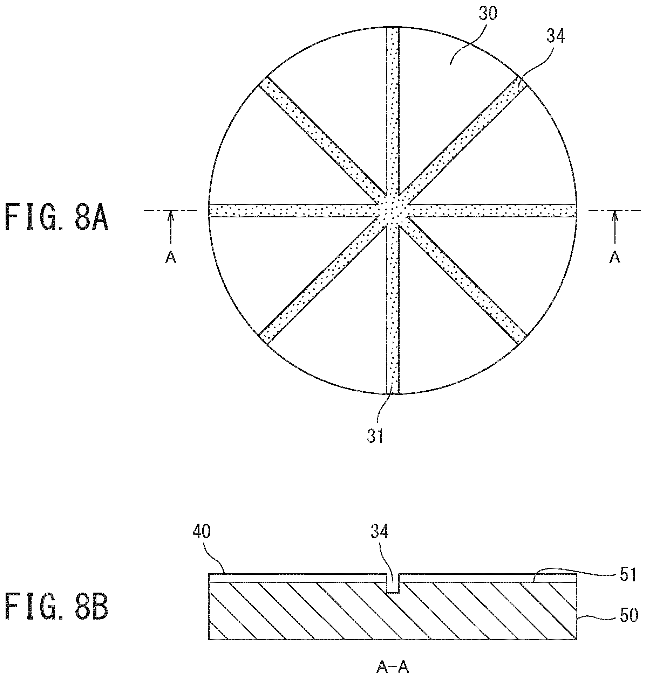

Referring to FIGS. 8A and 8B, only fourth grooves 34 are formed on the polishing surface 30. The grooves are formed on the polishing surface 30 in a radial pattern by forming the plurality of fourth grooves 34 on the polishing surface 30.

The depth of the fourth grooves 34 is not particularly limited, but may be deeper than the thickness of the hard layer 40. In other words, the fourth grooves 34 may be formed in the hard layer 40 and the soft layer 50. Therefore, the support surface 51 of the soft layer 50 supporting the hard layer 40 is also divided by the fourth grooves 34. The divided layers of the hard layer 40 are respectively supported by the divided surfaces of the support surface 51. Note that the depth of the fourth grooves 34 may be the same as the thickness of the hard layer 40 or may be shallower than that.

The decrease in the followability of the polishing surface 30 can be reduced by forming the radial grooves on the polishing surface 30.

In addition, grooves may be also formed on the polishing surface of the polishing pad used for the secondary polishing similar to the polishing pad 10 according to the second embodiment.

### 2-7. About Sixth Modification Example

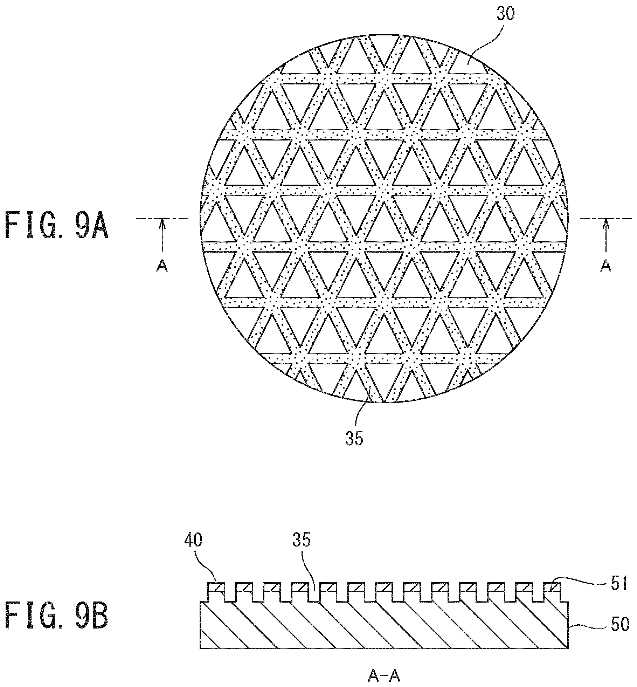

Referring to FIGS. 9A and 9B, only fifth grooves 35 are formed on the polishing surface 30. The grooves are formed on the polishing surface 30 in a triangular shape by forming the plurality of fifth grooves 35 on the polishing surface 30.

The depth of the fifth grooves 35 is not particularly limited, but may be deeper than the thickness of the hard layer 40. In other words, the fifth grooves 35 may be formed in the hard layer 40 and the soft layer 50. Therefore, the support surface 51 of the soft layer 50 supporting the hard layer 40 is also divided by the fifth grooves 35. The divided layers of the hard layer 40 are respectively supported by the divided surfaces of the support surface 51. Note that the depth of the fifth grooves 35 may be the same as the thickness of the hard layer 40 or may be shallower than that.

The decrease in the followability of the polishing surface 30 can be reduced by forming triangular grooves on the polishing surface 30.

In addition, grooves may be also formed on the polishing surface of the polishing pad used for the secondary polishing similar to the polishing pad 10 according to the second embodiment.

### 2-8. About Seventh Modification Example

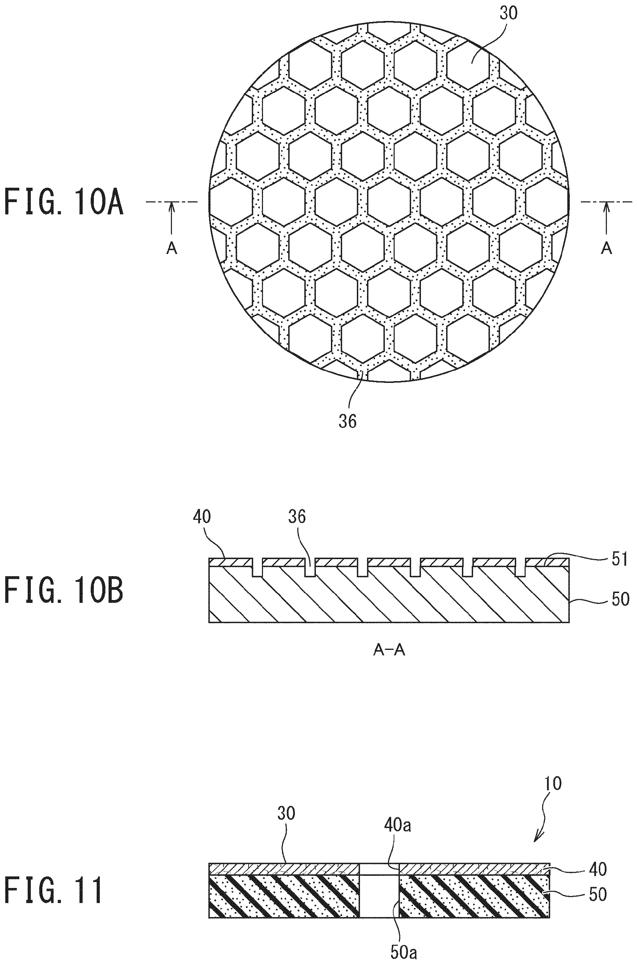

Referring to FIGS. 10A and 10B, only sixth grooves 36 are formed on the polishing surface 30. The grooves are formed on the polishing surface 30 in a hexagonal shape by forming the plurality of sixth grooves 36 on the polishing surface 30.

The depth of the sixth grooves 36 is not particularly limited, but may be deeper than the thickness of the hard layer 40. In other words, the sixth grooves 36 may be formed in the hard layer 40 and the soft layer 50. Therefore, the support surface 51 of the soft layer 50 supporting the hard layer 40 is also divided by the sixth grooves 36. The divided layers of the hard layer 40 are respectively supported by the divided surfaces of the support surface 51. Note that the depth of the sixth grooves 36 may be the same as the thickness of the hard layer 40 or may be shallower than that.

The decrease in the followability of the polishing surface 30 can be reduced by forming hexagonal grooves on the polishing surface 30.

Note that grooves may be also formed on the polishing surface of the polishing pad used for the secondary polishing similar to the polishing pad 10 according to the second embodiment.

In the modification examples, each groove shape of triangle, quadrangle, and hexagon has been described, but the present invention is not limited to these. A groove shape formed on the polishing surface 30 is not particularly limited, and may be any polygonal shape for example.

As described above, each configuration of the polishing pad 10 according to the first and second embodiments has been described, but the present invention is not limited to these. For example, another embodiment to be explained below also has the same effects as those of the polishing pad 10 according to the first and second embodiments.

### 3. Other Embodiment

As illustrated in FIG. 11, the polishing pad 10 used in a polishing method according to the present embodiment has a laminated structure that includes the hard layer 40 having the polishing surface 30 and the soft layer 50 consisting of an elastic body and supporting the hard layer 40.

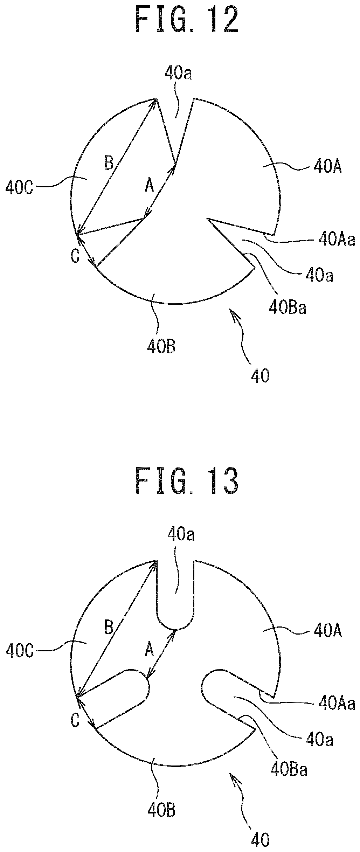

Three or more cutouts 40a that extend toward the center from the outer edge are formed in the hard layer 40 in a radial pattern (in the examples of FIGS. 12, 13, and 14, the number of the cutouts 40a is three), and the outer peripheral edge portion of the hard layer 40 is divided by the cutouts 40a into a plurality of petal-shaped regions 40A, 40B, and 40C. The central portion of the hard layer 40 located inside of the outer peripheral edge portion of the hard layer 40 is not divided by the cutouts 40a.

Because the soft layer 50 is elastically deformable and the outer peripheral edge portion of the hard layer 40 is divided by the cutouts 40a into the plurality of petal-shaped regions 40A, 40B, and 40C, the polishing surface 30 of the polishing pad 10 can be easily deformed according to a curved surface shape on the surface of the polishing object 90 at the time of polishing. For that reason, when polishing is performed on the surface of the curved polishing object 90 by using such the polishing pad 10, the waviness of the surface of the curved polishing object 90 can be removed because the polishing surface 30 of the polishing pad 10 is three-dimensionally deformed to follow the surface of the curved polishing object 90.

Because the polishing surface 30 of the polishing pad 10 can follow the curved surfaces of various curvatures regardless of the magnitude of curvature, the polishing method according to the present embodiment is applicable to the various surfaces of the polishing object 90 having different curvatures. Moreover, the polishing method according to the present embodiment is preferably applicable to the surface of the polishing object 90 having a plurality of curved portions having different curvatures and the surface of the polishing object 90 having concave and convex portions.

In order for the polishing surface 30 to deform according to a curved surface shape of the surface of the polishing object 90 and follow the surface of the polishing object 90, the cutouts 40a are preferably formed so that the polishing surface 30 becomes a convex curved surface or a concave curved surface when connecting the facing split ends (e.g., a split end 40Aa of the petal-shaped region 40A and a split end 40Ba of the petal-shaped region 40B) of the adjacent petal-shaped regions (e.g., the petal-shaped regions 40A and 40B) (see FIGS. 12, 13, and 14). Moreover, the surface of the soft layer 50 that contacts the hard layer 40 may form a convex curved surface or a concave curved surface.

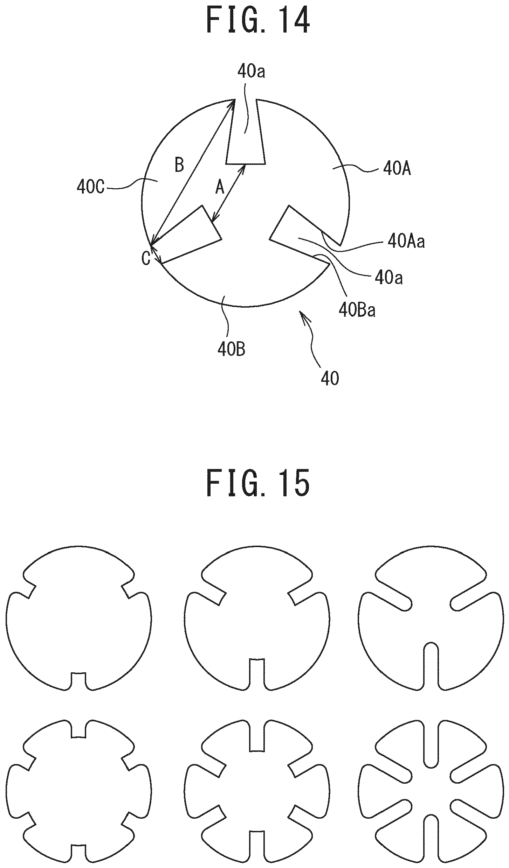

The planar shape (the shape of the cutouts 40a in a vertical projection view when the cutouts 40a are viewed from a viewpoint at a position perpendicular to the polishing surface 30) of the cutouts 40a is not particularly limited, and may be a V shape illustrated in FIG. 12, or may be a band shape illustrated in FIG. 13 or a trapezoidal shape illustrated in FIG. 14. The V-shaped cutouts 40a illustrated in FIG. 12 have a shape in which the outer edge end is the widest and the width becomes gradually narrow toward the center. The central end of the V-shaped cutouts 40a may have a sharp shape as illustrated in FIG. 12 or may have an arc shape.

The band-shaped cutouts 40a illustrated in FIG. 13 have a width that is constant from the outer edge end to the central end. The central ends of the band-shaped cutouts 40a may have an arc shape as illustrated in FIG. 13 (i.e., may be the U-shaped cutouts 40a), but may have a polygonal shape such as a rectangular shape.

The trapezoidal cutouts 40a illustrated in FIG. 14 have a shape in which the outer edge end has the narrowest width and the width is gradually widening toward the center. The central ends of the trapezoidal cutouts 40a may have a polygonal shape such as a rectangular shape as illustrated in FIG. 14, or may have an arc shape.

The shape of the plurality of petal-shaped regions 40A, 40B, and 40C obtained by dividing the outer peripheral edge portion of the hard layer 40 by the cutouts 40a is not particularly limited, but may be formed as described below. In other words, the shape is formed so that a ratio B/A between a distance A (also be called a width at the central end of the petal-shaped region) between the central ends of the adjacent cutouts 40a and a distance B (also be called a width at the outer edge end of the petal-shaped region) between the outer edge ends of the adjacent cutouts 40a is 1 or more. The ratio B/A is more preferably 1.3 or more.

Furthermore, the shape of the plurality of petal-shaped regions 40A, 40B, and 40C may be formed as described below. In other words, the shape may be formed so that a ratio A/C between a width C at the outer edge end of the cutout 40a and the distance A described above satisfies an expression "0.8 < A/C < 32.3". The ratio A/C more preferably satisfies an expression "1.2 < A/C < 15.7".

Furthermore, the shapes of the hard layer 40 and the polishing surface 30 are not particularly limited, but the hard layer 40 may have a disk shape and the outside surface (surface opposite to the surface facing the soft layer 50 and exposed to the outside) of the hard layer 40 forming the polishing surface 30 may have a circular shape. When the polishing surface 30 has a circular shape, the plurality of cutouts 40a may be formed evenly (with equal intervals) in the circumferential direction of the polishing surface 30.

When the polishing surface 30 has a circular shape, the radial length (the length in a direction along the radial direction of the polishing surface 30) of the cutout 40a is not particularly limited, and can be set to various lengths as illustrated in FIG. 15. For example, the radial length may be equal to or less than 2/3 of the radius of the polishing surface 30. The radial length of the cutout 40a is more preferably equal to or less than 1/2 of the radius of the polishing surface 30.

Furthermore, the number of the cutouts 40a provided in the hard layer 40 is not particularly limited, and can be set to various numbers as illustrated in FIG. 15, but is preferably 3 or more and 6 or less.

Furthermore, the cutouts 40a may be formed by cutting out only the hard layer 40, or may be formed by cutting out the hard layer 40 and the soft layer 50. As illustrated in FIG. 11, when the cutout 40a is formed by cutting out the hard layer 40 and the soft layer 50, a concave portion 50a that extends in the thickness direction of the soft layer 50 from the surface of the soft layer 50 contacting the hard layer 40 is formed in the soft layer 50 to be continuous with the cutout portion of the hard layer 40, and the cutout portion of the hard layer 40 and the concave portion 50a of the soft layer 50 are integrally formed to form the cutout 40a.

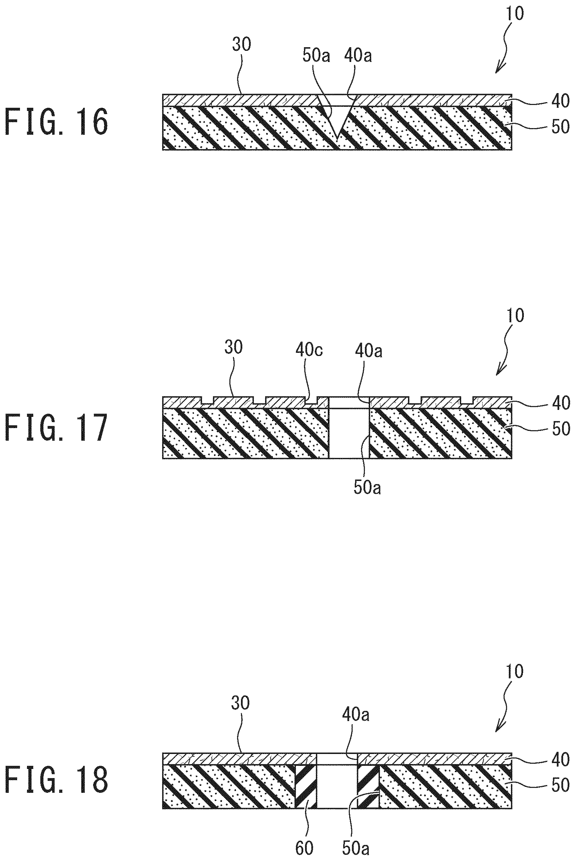

As illustrated in FIG. 11, the concave portion 50a of the soft layer 50 may be a through-hole that penetrates from the surface of the soft layer 50 contacting the hard layer 40 to the opposite surface, or may be the bottomed concave portion 50a as illustrated in FIG. 16.

The cross-sectional shape (the cross-sectional shape when being cut by a plane perpendicular to the polishing surface 30) of the cutout 40a formed by integrating the cutout portion of the hard layer 40 and the concave portion 50a of the soft layer 50 is not particularly limited, and may be a V shape illustrated in FIG. 16 or may be an arc shape or a polygonal shape such as a rectangle.

The types of materials constituting the hard layer 40 are not particularly limited, but may be a material of which a hardness (may be referred to as "C hardness") by a test method prescribed in Annex 2 "Spring Hardness Test Type C Test Method" of JIS K 7312: 1996 is 40 or more and 80 or less. If the hardness of the material constituting the hard layer 40 is within the above range, the polishing surface 30 easily follows the surface of the curved polishing object 90 and the waviness of the surface of the polishing object 90 is easily removed.

In the above test method of the hardness, a spring hardness tester uses one that indicates on a scale as the hardness, when bring the pressure surface of the tester into close contact with the surface of a test piece, a distance by which a push needle protruding from a hole in the center of the pressure surface by spring pressure is pushed back by the test piece. The measurement surface of the test piece has at least the size not less than that of the pressure surface of the tester.

Furthermore, as illustrated in FIG. 17, a plurality of linear grooves 40c having the width of 0.5 mm or more and 5 mm or less may be formed on the outside surface of the hard layer 40. When the hard layer 40 includes the linear grooves 40c, the polishing surface 30 easily follows the surface of the curved polishing object 90 and the waviness of the surface of the polishing object 90 is easily removed.

At the time of polishing, because the polishing composition is easily spread out up to the center of the polishing surface 30 along the linear grooves 40c and contaminant is easily discharged along the linear grooves 40c when the contaminant enters between the polishing surface 30 and the surface of the polishing object 90, the occurrence of polishing scratches is suppressed even if the surface of the polishing object 90 is a relatively soft surface of a paint film etc.

The plurality of linear grooves 40c may be a linear shape or a curved shape. Moreover, the linear grooves may be formed in a striped shape by arranging the linear grooves 40c with a linear shape or a curved shape in parallel with each other, or may be formed by intersecting them in a grid pattern. Alternatively, the linear grooves 40c with a circular shape or an elliptical shape may be formed concentrically.

The linear grooves 40c may be a groove with a depth that penetrates from the outside surface of the hard layer 40 to the surface of the hard layer contacting the soft layer 50, or may be a bottomed groove as illustrated in FIG. 17. Moreover, the cross-sectional shape (the cross-sectional shape when being cut by a plane perpendicular to the polishing surface 30) of the linear grooves 40c is not particularly limited, and may be a rectangular shape as illustrated in FIG. 17, or may be a triangle shape, an arc shape, or the like.

When the concave portion 50a is formed in the soft layer 50 as described above, a water stop layer 60 that restrains the slurry-like polishing composition from penetrating into the soft layer 50 may be formed on the inner surface of the concave portion 50a of the soft layer 50 (see FIG. 18). By covering the inner surface of the concave portion 50a of the soft layer 50 with the water stop layer 60 consisting of water stop material (e.g., foamed rubber) having low water absorption, the polishing composition is hard to penetrate into the soft layer 50 during polishing. For that reason, because the polishing composition that is not used for polishing becomes small and the utilization efficiency of the polishing composition becomes high, polishing costs can be suppressed.

If water stop material can restrain the polishing composition from penetrating into the soft layer 50, the type of water stop material is not particularly limited, but the water stop material includes foamed rubber such as chloroprene rubber foam, ethylene propylene rubber foam, silicone rubber foam, fluoro-rubber foam, polyurethane foam, and polyethylene foam. Note that, in addition to the inner surface of the concave portion 50a, a water stop layer may be provided on the surface of the soft layer 50 at a portion where the surface easily contacts the polishing composition.

In the polishing pad 10 used in the polishing method according to the present embodiment, a penetrating portion 1a that is a hole penetrating through the hard layer 40 in the thickness direction may be formed in a region inside (center side) from the outer edge of the polishing surface 30. In other words, the opening of the penetrating portion 1a is not opened and is closed, at the outer edge of the hard layer 40. Note that, if the penetrating portion 1a is formed in the region inside from the outer edge of the polishing surface 30, the penetrating portion may be a hole extending parallel to the thickness direction of the hard layer 40 or may be a hole extending in a direction inclined with respect to the thickness direction of the hard layer 40.

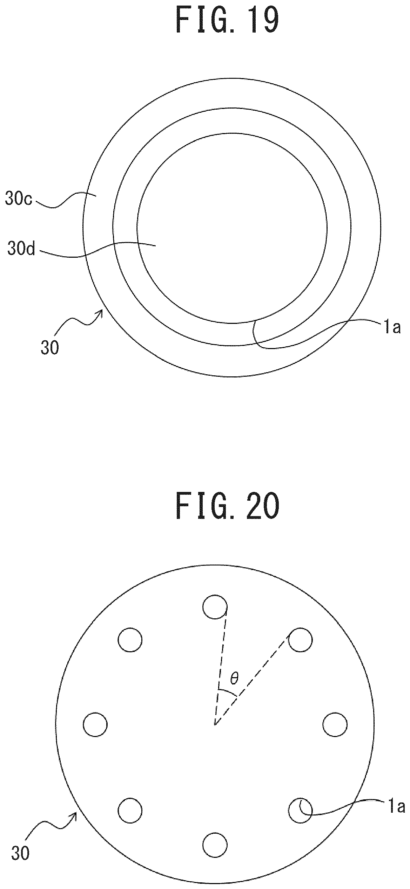

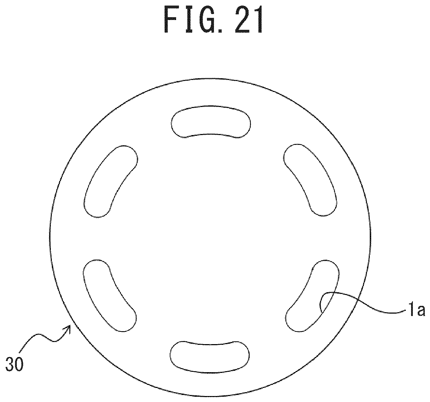

Although the details will be described later, the penetrating portion 1a forms a continuous annular shape along the circumferential direction of the polishing surface 30 as illustrated in FIG. 19. The polishing surface 30 may be divided by the penetrating portion 1a into an annular polishing surface 30c outside of the penetrating portion 1a and a circular polishing surface 30d inside of the penetrating portion 1a. Alternatively, as illustrated in FIGS. 20 and 21, the penetrating portion 1a is not formed continuously along the circumferential direction of the polishing surface 30, and the polishing surface 30 may have a shape (may be referred to as "non-annular shape") not to be divided by the penetrating portions 1a into plural surfaces.

The planar shape of the opening of the penetrating portion 1a, that is, the shape of the opening of the penetrating portion 1a in a vertical projection view when the opening of the penetrating portion 1a is viewed from a viewpoint at a position perpendicular to the polishing surface 30 is not particularly limited. For example, the planar shape of the opening of the penetrating portion 1a includes an annular shape (see FIG. 19) and a non-annular shape. A non-annular shape includes a circular shape (see FIG. 20), a cocoon shape (see FIG. 21), an elliptical shape, a polygonal shape (triangle, quadrangle, pentagon, hexagon, octagon, etc.), a linear shape (band shape), a curved shape (arc shape, C-shape, U-shape, S-shape, etc.), an indefinite shape, or the like. When the opening of the penetrating portion 1a has a corner, because damage such as chipping easily occurs in that corner, the opening preferably has a shape not having a corner such as an annular shape and a circular shape. All the shapes of the openings of the plurality of penetrating portions 1a may be the same, or some or all of them may be different.

The size of the openings of the penetrating portions 1a and the number of the penetrating portions 1a are preferably set so that a proportion of the total area of the openings of the penetrating portions 1a with respect to the area (the total area of the region inside from the outer edge of the polishing surface 30, including the openings of the penetrating portions 1a) of the polishing surface 30 is 3% or more and 35% or less. In other words, in a vertical projection view when the polishing surface 30 is viewed from a viewpoint at a position perpendicular to the polishing surface 30, an area of the polishing surface 30 and areas of the openings of the penetrating portions 1a are measured. Then, the areas of the openings of all the penetrating portions 1a are added, the added total area of the openings of the penetrating portions 1a is divided by the area of the polishing surface 30, and a proportion of the total area of the openings of the penetrating portions 1a with respect to the area of the polishing surface 30 is calculated.

If the proportion of the total area of the openings of the penetrating portions 1a with respect to the area of the polishing surface 30 is 3% or more, the polishing surface easily follows the surface of the curved polishing object 90 because the flexibility of the hard layer 40 is good. On the other hand, if the proportion of the total area of the openings of the penetrating portions 1a with respect to the area of the polishing surface 30 is 35% or less, polishing performance of the hard layer 40 is good and the waviness of the surface of the curved polishing object 90 is easily removed. Note that the proportion of the total area of the openings of the penetrating portions 1a with respect to the area of the polishing surface 30 is more preferably 6% or more and 20% or less.

The mode of the arrangement of the openings of the penetrating portions 1a on the polishing surface 30 is not particularly limited, but it is preferable that the distance from the outer edge of the polishing surface 30, the distance from the center of the polishing surface 30, the interval between the openings of the penetrating portions 1a, etc. are appropriately set so that the flexibility and polishing performance of the hard layer 40 are suitable.

When the planar shape of the opening of the penetrating portion 1a is an annular shape, the polishing surface 30 is divided into the annular polishing surface 30c outside of the penetrating portion 1a and the circular polishing surface 30d inside of the penetrating portion 1a. The shape of the penetrating portion 1a in this case is not particularly limited, and may be a perfect circular shape or an elliptical shape.

The proportion of the width of the annular penetrating portion 1a with respect to the diameter of the polishing surface 30 is set to be preferably 2.5% or more and 15% or less, and to be more preferably 8% or more and 13% or less. If it is within these ranges, the polishing surface 30 easily follows the surface of the curved polishing object 90 and the waviness of the surface of the curved polishing object 90 is easily removed.

The position of the annular penetrating portion 1a on the polishing surface 30 is not particularly limited if it is in the region inside (center side) from the outer edge of the polishing surface 30, but the annular penetrating portion 1a is preferably arranged at a position where the center of the annular polishing surface 30c outside of the penetrating portion 1a and the center of the circular polishing surface 30d inside of the penetrating portion 1a are common.

The hard layer 40 having the annular polishing surface 30c outside of the penetrating portion 1a and the hard layer 40 having the circular polishing surface 30d inside of the penetrating portion 1a may be formed of the same material or different materials.

If the A hardness of the hard layer 40 having the circular polishing surface 30d inside of the penetrating portion 1a is larger than the A hardness of the hard layer 40 having the annular polishing surface 30c outside of the penetrating portion 1a, it is preferable because the waviness of the surface of the curved polishing object 90 can be more efficiently removed.

When the planar shape of the openings of the penetrating portions 1a is a non-annular shape, the size of the openings of the penetrating portions 1a and the number of the penetrating portions 1a are not particularly limited, but the number of the penetrating portions 1a is preferably 3 or more and 16 or less, and is more preferably 5 or more and 10 or less. Because the flexibility of the hard layer 40 is good if the number of the penetrating portions 1a is 3 or more, the polishing surface easily follows the surface of the curved polishing object 90. On the other hand, if the number of the penetrating portions 1a is 16 or less, the polishing performance of the hard layer 40 is good and the waviness of the surface of the curved polishing object 90 is easily removed. All the sizes of the openings of the plurality of penetrating portions 1a may be the same, or some or all of them may be different.

The mode of the arrangement of the non-annular penetrating portions 1a is not particularly limited, and for example, the openings of the plurality of non-annular penetrating portions 1a may be linearly arranged on the polishing surface 30, may be curvedly arranged, or may be annularly arranged. When the plurality of non-annular penetrating portions 1a are annularly arranged, the polishing surface 30 can be regarded as a shape made by connecting at multiple points the annular polishing surface 30c outside of the penetrating portion 1a and the circular polishing surface 30d inside of the penetrating portion 1a, which are divided by the annular penetrating portion 1a, and thus the polishing surface 30 easily follows the surface of the curved polishing object 90 and the waviness of the surface of the curved polishing object 90 is easily removed.

A plurality of opening groups of which each is formed by arranging the openings of the plurality of non-annular penetrating portions 1a linearly, curvedly, or annularly may be regularly or irregularly provided on the polishing surface 30. For example, a plurality of opening groups of which each is formed by linearly or curvedly arranging the openings of the plurality of non-annular penetrating portions 1a may be arranged in parallel on the polishing surface 30. Moreover, a plurality of opening groups of which each is formed by annularly arranging the openings of the plurality of non-annular penetrating portions 1a may be arranged on the polishing surface 30 concentrically or in rows.

When virtual straight lines (dotted lines in FIG. 20) are drawn from the facing ends of the openings of the adjacent two non-annular penetrating portions 1a to the center of the polishing surface 30, an angle θ formed by these two virtual straight lines is preferably 20° or more and 85° or less, and is more preferably 20° or more and 40° or less. If it is within the ranges, the polishing surface 30 easily follows the surface of the curved polishing object 90 and the waviness of the surface of the curved polishing object 90 is easily removed.

The openings of the plurality of non-annular penetrating portions 1a are preferably arranged on the polishing surface 30 to have symmetry such as line symmetry and point symmetry as a whole. For example, the openings of the non-annular penetrating portions 1a are preferably arranged so that virtual straight lines obtained by sequentially connecting the centers of the openings of the adjacent non-annular penetrating portions 1a form a regular polygon such as a square, a regular hexagon, and a regular octagon. In other words, it is preferable that the centers of the openings of the plurality of non-annular penetrating portions 1a are respectively arranged at positions corresponding to vertices of the regular polygon virtually arranged on the polishing surface 30. In this case, it is preferable that the center of the polishing surface 30 coincides with the center of the regular polygon.

The polishing pad 10 illustrated in FIG. 20 is an example in which the openings of the eight non-annular penetrating portions 1a are respectively arranged at positions corresponding to the vertices of a regular octagon. The polishing pad 10 illustrated in FIG. 21 is an example in which the openings of the six non-annular penetrating portions 1a are respectively arranged at positions corresponding to the vertices of a regular hexagon.

Moreover, to further improve the flexibility of the hard layer 40, a concave portion may be provided in the soft layer 50. The concave portion of the soft layer 50 may be a penetrating portion penetrating through the soft layer 50 in the thickness direction, or may be a bottomed hole formed on the surface of the soft layer 50 contacting the hard layer 40.

When the concave portion of the soft layer 50 is a bottomed hole, the cross-sectional shape (cross-sectional shape when being cut by a plane perpendicular to the polishing surface 30) is not particularly limited, and may be a V shape, or may be an arc shape or a polygonal shape such as a rectangle.

The concave portion of the soft layer 50 may be formed continuously with the annular or non-annular penetrating portion 1a of the hard layer 40 (that is, may be arranged at the same position on the polishing surface 30), or may be formed discontinuously.

A ratio of a diameter of the layer (the hard layer 40) having the polishing surface 30 with respect to a diameter of the polishing pad attaching part 11 of the polishing tool 4 is not particularly limited, but it is preferable that the diameter of the layer (the hard layer 40) having the polishing surface 30 is larger than the diameter of the polishing pad attaching part 11 of the polishing tool 4. For example, the ratio is preferably 1.04 times or more and 2 times or less, is more preferably 1.04 times or more and 1.6 times or less, and is further preferably 1.1 times or more and 1.3 times or less. If it is in such the ranges, pressure distribution when the curved polishing object 90 is polished becomes more uniform, and the easiness of handling during polishing is improved.

The side surface of the soft layer 50 is a columnar surface or a conical surface when the soft layer 50 is columnar or truncated conical, and is a planar surface when it is prismatic or truncated pyramidal, but these side surfaces are not limited to a flat surface. These side surfaces may be a convex surface protruding toward the outside of the soft layer 50 or a concave surface recessed toward the inside of the soft layer 50. When the shape of the soft layer 50 is frustum, an angle of inclination of the side surface of the soft layer 50 with respect to the central axial line of the frustum is not particularly limited, but the flexibility of the hard layer 40 can be adjusted by the angle of inclination.

Because the polishing surface 30 of the polishing pad 10 is three-dimensionally deformed and follows the surface of the curved polishing object 90 if the curved surface of the polishing object 90 is polished by using the polishing pad 10 with such a configuration, the waviness of the surface of the curved polishing object 90 can be sufficiently removed and it is preferably because damage such as chipping is hard to occur in the polishing pad 10.

### 4. About Polishing Composition

An example of the polishing composition used in the polishing method described above will be explained. The polishing composition is preferably composed of emulsion containing abrasives and at least one additive selected from an oil solvent, an emulsion stabilizer, and a thickener. Hereinafter, the details of the polishing composition will be described.

The polishing composition is not particularly limited. For example, the polishing composition can employ slurry that includes abrasives selected from particles consisting of a carbide of silicon such as silicon carbide, particles consisting of oxides of silicon or metallic elements such as silicon dioxide or silica, aluminum oxide or alumina, ceria, titania, zirconia, iron oxide, and manganese oxide, organic particles consisting of thermoplastic resin and a silicate compound such as zircon, organic-inorganic composite particles, and the like, and especially abrasives composed of at least one of aluminum oxide, cerium oxide, and zirconium oxide.

For example, the polishing composition can further preferably employ alumina slurry that enables a high polishing removal rate and is easily available.

Alumina has different crystalline forms such as α-alumina, β-alumina, γ-alumina, and θ-alumina, and also includes an aluminum compound called hydrated alumina. From the viewpoint of a polishing removal rate, one containing α-alumina as the main component is more preferable as abrasives.

Moreover, a mixture etc. of alumina and zircon can be preferably used as abrasives.

The average secondary particle diameter of abrasives is not particularly limited, but is preferably 15.0 µm or less and is more preferably 5.0 µm or less. As the average secondary particle diameter becomes smaller, the dispersion stability of the polishing composition is improved and the occurrence of scratches on the surface to be polished is suppressed.

The average secondary particle diameter of abrasives can be measured by a pore electrical resistance method (measuring machine: Multisizer Type III made by Beckman Coulter, Inc.).

The content of abrasives in the polishing composition is not particularly limited, but is preferably 0.1% by mass or more, is more preferably 5% by mass or more, and is further preferably 10% by mass or more. As the content of abrasives becomes more, the polishing removal rate tends to be improved. When the content of abrasives is within the ranges, the polishing removal rate can be easily improved to a level particularly suitable for practical use.

Moreover, the content of abrasives is not particularly limited, but is preferably 50% by mass or less, is more preferably 35% by mass or less, and is further preferably 30% by mass or less. When the content of abrasives is within the ranges, the cost of the polishing composition can be suppressed. Moreover, it is possible to further suppress the occurrence of a surface defect on the surface of the polishing object after polishing is performed by using the polishing composition. Note that the polishing object may contain at least one selected from a group consisting of a resin material, an alloy material, metal, metalloid, a metal oxide material, a metalloid oxide material, and a glass material.

The polishing composition according to the present embodiment preferably contains an additive. A specific example of the additive includes an oil solvent, an emulsion stabilizer, and a thickener, for example. The additive may be used alone or in combination of two or more. The stability of the emulsion tends to be improved by adding the additive. Note that an additive may employ a surface modifier, alkali, etc. to be described below.

An example of an oil solvent includes a synthetic oil such as liquid paraffin, polybutene, α-olefin oligomer, alkylbenzene, polyol ester, phosphate ester, and silicone oil, a mineral oil such as spindle oil, neutral oil, and bright stock, a vegetable oil fat such as castor oil, soybean oil, coconut oil, linseed oil, cottonseed oil, rapeseed oil, tung oil, and olive oil, and an animal oil fat such as beef tallow, squalane, and lanolin, for example.

An example of an emulsion stabilizer includes a polyhydric alcohol such as glycerin, ethylene glycol, and propylene glycol, an aliphatic alcohol such as cetyl alcohol and stearyl alcohol, and the like.

An example of a thickener includes a synthetic thickener such as polyacrylic acid and sodium polyacrylate (e.g., completely neutralized, partially neutralized, and associative alkali-soluble polyacrylic acid (acrylic polymer), etc.), a cellulosic thickener (semi-synthetic thickener) such as carboxymethyl cellulose and carboxyethyl cellulose, and a natural thickener such as agar, carrageenan, a layered silicate compound, xanthan gum, and gum arabic, for example. When using associative alkali-soluble polyacrylic acid, polyacrylic acid and alkali are used together. An alkali includes an inorganic alkali such as sodium hydroxide, potassium hydroxide, and ammonia, an organic alkali such as triethanolamine, and the like. Polyacrylic acid shows a thickening effect by adding an alkali. Moreover, a thickener may be a Newtonian fluid or a non-Newtonian fluid.

The polishing composition may appropriately contain other component such as lubricating oil, organic solvent, and surfactant if needed, in addition to the abrasives.

A lubricating oil may be a synthetic oil, a mineral oil, a vegetable oil fat, or a combination thereof, for example.

An organic solvent may be alcohol, ether, glycols, glycerin, or the like, in addition to a hydrocarbon solvent, for example.

A surfactant may be so-called anion, cation, non-ion, or amphoteric surfactant, for example.

### 5. Examples

### (Example 1)

A polishing pad according to Example 1 includes a hard layer consisting of disk-shaped nonwoven fabric having a diameter of 12.5 cm and a thickness of 0.5 cm and a soft layer consisting of disk-shaped polyurethane foam having a diameter of 12.5 cm and a thickness of 1 cm. One disk surface of the hard layer forms a polishing surface, and the soft layer is joined to the other disk surface. An area ratio of the concave portion of the hard layer is 95%. Moreover, the A hardness of the hard layer is 70. Note that the A hardness of the hard layer in the present embodiment is the smallest value among the five points measured at 3 mm intervals according to JIS K 6253.

### (Examples 2 to 4 and Comparative Examples 1 to 3)

Polishing pads according to Examples 2 to 4 and Comparative Examples 1 to 3 are similar to the polishing pad according to Example 1 except that numeric values on the area ratio of the concave portion and the A hardness are different as recited in Table 1.

### (Example 5)

A polishing pad according to Example 5 includes a hard layer consisting of disk-shaped nonwoven fabric having a diameter of 15.0 cm and a thickness 0.5 cm and a soft layer consisting of disk-shaped polyurethane foam having a diameter of 15.0 cm and a thickness 2 cm. One disk surface of the hard layer forms a polishing surface, and the soft layer is joined to the other disk surface. An area ratio of the concave portion of the hard layer is 62%. Moreover, the A hardness of the hard layer is 84.

### (Example 6)

The polishing pad according to Example 2 was attached to a polishing pad attaching part having a small diameter and was evaluated.

### (Example 7)

The polishing pad according to Example 5 was attached to the polishing pad attaching part having a small diameter and was evaluated.

Next, the used polishing object will be described. The polishing object is a metal plate painted with synthetic resin paint, and the thickness of a clear film layer is 30 µm. That is to say, a surface to be polished is a painted surface consisting of synthetic resin. The polishing object employed one having a flat surface to be polished and one having a concave surface to be polished of R100.

Next, the used polishing composition will be described.

### (Preparation of Polishing Composition)

Dispersion liquid (O/W type emulsion) was prepared by adding abrasives, isoparaffin hydrocarbon (first liquid), surfactant whose HLB is 13.3, a dispersing agent, a thickener, and an emulsion stabilizer to water (second liquid) and stirring these at room temperature (25°C). Next, the polishing composition of O/W type emulsion was obtained by adding alkali to the dispersion liquid to adjusts a viscosity to 1,000 to 10,000 mPa·s (rotational viscometer: TVB-10H 20 rpm).

This polishing composition contains alumina of 30% by mass as abrasives, the average secondary particle diameter of this alumina is 12 µm, and a pregelatinization rate is 90 to 100%. The average secondary particle diameter is a value of D₅₀ measured by the pore electrical resistance method by using Multisizer III (made by Beckman Coulter, Inc.). The pregelatinization rate was calculated from an integrated strength ratio of the (113) plane diffraction line by X-ray diffraction measurement using an X-ray analyzer (Ultima-IV, made by Rigaku Corporation).

A surface to be polished of the polishing object described above was polished by using the polishing pads according to Examples 1 to 5 and Comparative Examples 1 to 3. In the polishing, the polishing composition was interposed between the surface to be polished of the polishing object and the polishing surface of the polishing pad.

A robot arm was used for polishing. A robot used for polishing is an apparatus configured by attaching a double action polisher to the tip of the arm of the industrial robot "M-20iA" made by FANUC Corporation. Examples 1 to 5 and Comparative Examples 1 to 3 employed the polishing pad attaching part having the diameter of 12.5 cm, and Examples 6 and 7 employed the polishing pad attaching part having the diameter of 7.5 cm. Polishing was performed by attaching the polishing pad to the double action polisher, pressing the polishing surface of the polishing pad against the surface to be polished of the polishing object by a pressing force applied to the arm, and rotating the double action polisher while supplying the polishing composition onto the surface to be polished.

Note that the specific polishing conditions are as follows:
Pressure: 50 g/cm²;
Rotation number of polisher: 3800 rpm;
Flow rate of polishing composition: 1.7 ml/min; and
Polishing time: 21 minutes.

If polishing is terminated, the waviness elimination and polishing rate of the surface to be polished of each polishing object were evaluated. The results obtained by polishing the flat surface to be polished are indicated in Table 1. Herein, "waviness elimination" means a degree of the removed surface waviness.

The waviness elimination was evaluated from a value of We by using a painted-surface profile measuring device "Wavescan dual" made by BYK-Gardner. The value of We before polishing was 7.5. When We of the surface to be polished after polishing is less than 2.0, it was indicated by "A" in Table 1. When We is 2.0 or more and less than 3.0, it was indicated by "B" in Table 1. When We is 3.0 or more and less than 4.0, it was indicated by "C" in Table 1. When We is 4.0 or more and less than 5.0, it was indicated by "D" in Table 1. When We is 5.0 or more, it was indicated by "E" in Table 1.

The polishing removal rate was evaluated by determining film thicknesses before and after polishing by an electromagnetic-induction film thickness measuring device, evaluating a machining allowance from the difference, and dividing it by a polishing time to calculate a polishing rate. When the polishing removal rate is 0.50 µm/min or more, it was indicated by "A" in Table 1. When the polishing removal rate is 0.40 µm/min or more and less than 0.50 µm/min, it was indicated by "B" in Table 1. When the polishing removal rate is 0.30 µm/min or more and less than 0.40 µm/min, it was indicated by "C" in Table 1. When the polishing removal rate is 0.20 µm/min or more and less than 0.30 µm/min, it was indicated by "D" in Table 1. When the polishing removal rate is less than 0.20 µm/min, it was indicated by "E" in Table 1.

A comprehensive evaluation indicates an average of the evaluation of We and the evaluation of the polishing removal rate. When We and polishing removal rate are "A" together, the comprehensive evaluation is indicated by "A". When one of We and polishing removal rate is "A" and the other is "B", the comprehensive evaluation is indicated by "B+". When one of We and polishing removal rate is A and the other is C, or both are B together, the comprehensive evaluation is indicated by "B". Hereinafter, the comprehensive evaluations are similarly indicated in the order of "C+, C, D+, D, E+, and E". If the comprehensive evaluation is B or more, it is Pass.

**Table 1**

| | Area ratio of sparse portion [%] | A hardness | Ratio of diameter of layer having polishing surface to diameter of polishing pad attaching part | We/Evaluation | Polishing removal rate [µm/min]/ Evaluation | Comprehensive evaluation |
|---|---|---|---|---|---|---|
| Example 1 | 94.6 | 70 | 1.0 | 1.0/A | 0.52/A | A |
| Example 2 | 62.2 | 84 | 1.0 | 2.9/B | 0.57/A | B+ |
| Example 3 | 67.8 | 81 | 1.0 | 2.6/B | 0.52/A | B+ |
| Example 4 | 53.8 | 94 | 1.0 | 1.3/A | 0.33/C | B |
| Example 5 | 62.2 | 84 | 1.2 | 2.8/B | 0.58/A | B+ |
| Example 6 | 62.2 | 84 | 1.7 | 2.8/B | 0.50/A | B+ |
| Example 7 | 62.2 | 84 | 2.0 | 2.8/B | 0.49/B | B |
| Comp. Ex. 1 | 50.3 | 74 | 1.0 | 2.2/B | 0.38/C | C+ |
| Comp. Ex. 2 | 72.3 | 64 | 1.0 | 3.7/C | 0.29/D | D+ |
| Comp. Ex. 3 | 93.7 | 50 | 1.0 | 5.0/E | 0.19/E | E |

From these test results, it turns out that, when using the polishing composition and the polishing pad according to each of Examples, the polishing composition has sufficient holding characteristics to the polishing pad because an area ratio of the concave portion of the polishing pad is appropriate, and the polishing removal rate is sufficient and the surface to be polished has the sufficient waviness elimination in a predetermined time because the A hardness is high. Moreover, Examples 5 to 7 indicate a case where the diameter of the layer having the polishing surface is larger than the diameter of the polishing pad attaching part. In Examples 5 to 7 compared to Example 2 indicating a case where the diameter of the polishing pad attaching part is the same as the diameter of the layer having the polishing surface, when the concave surface to be polished of R100 is polished, it was confirmed that the generation of local pressure was suppressed because the polishing pad attaching part is hard to hit against the part to be polished. On the other hand, when using the polishing pad of each of Comparative Examples, the waviness elimination was insufficient because the area ratio of the concave portion or the A hardness is not appropriate.

### Reference Signs List

- 1: automatic polishing apparatus
- 2: robot arm
- 4: polishing tool
- 5: pressing pressure detecting unit
- 7: controller
- 10: polishing pad
- 30: polishing surface
- 31: first groove
- 32: second groove
- 33: third groove
- 34: fourth groove
- 35: fifth groove
- 36: sixth groove
- 40: hard layer
- 40a: cutout
- 40A: petal-shaped region
- 40Aa: split end
- 40B: petal-shaped region
- 40Ba: Ba
- 40c: linear groove
- 40c: petal-shaped region
- 50: soft layer
- 50a: concave portion
- 51: support surface
- 60: water stop layer
- 90: polishing object (polishing object)

## Claims

1. A polishing pad comprising:
a layer having a polishing surface, wherein
the layer having the polishing surface has a sparse and dense structure, in which a proportion of a sparse portion is 52% or more and 96% or less, and is composed of a sheet material having an A hardness of 70 or more measured according to JIS K 6253.

2. The polishing pad according to claim 1, wherein the layer having the polishing surface is composed of a nonwoven fabric or a sheet-like material containing resin fiber.

3. The polishing pad according to claim 1 or 2, wherein
the layer having the polishing surface contains resin fiber, and
the resin fiber is composed of a material containing nylon resin, polyester resin, polyurethane resin, epoxy resin, aramid resin, polyimide resin, or polyethylene resin.

4. The polishing pad according to any one of claims 1 to 3, further comprising:
a layer consisting of an elastic body and supporting the layer having the polishing surface, on a surface opposite to the polishing surface of the layer having the polishing surface.

5. The polishing pad according to claim 4, wherein the layer supporting the layer having the polishing surface is composed of an elastic body made of resin.

6. The polishing pad according to claim 4 or 5, wherein the layer supporting the layer having the polishing surface has a lower A hardness measured according to JIS K 6253 than the A hardness of the layer having the polishing surface.

7. The polishing pad according to any one of claims 1 to 6, wherein a diameter of the layer having the polishing surface is larger than a diameter of a polishing pad attaching part.

8. The polishing pad according to any one of claims 1 to 7, wherein a groove is formed on the polishing surface.

9. A polishing method comprising:
scanning a polishing object in presence of a polishing composition with the polishing pad according to any one of claims 1 to 8, wherein
the polishing composition consists of emulsion containing abrasives and at least one additive selected from an oil solvent, an emulsion stabilizer, and a thickener.

10. The polishing method according to claim 9, wherein the abrasives include at least one of aluminum oxide, cerium oxide, and zirconium oxide.

11. The polishing method according to claim 9 or 10, wherein the polishing object includes at least one selected from a group consisting of a resin material, an alloy material, metal, metalloid, a metal oxide material, a metalloid oxide material, and a glass material.
